# NOUVEAU FASCICULE DE BREVET EUROPEEN

(11) **EP 0 913 653 B2**
(45) Date de publication et mention de la décision concernant l'opposition: **28.03.2007**
(45) Mention de la délivrance du brevet: 21.05.2003
(21) Numéro de dépôt: 98402535.3
(22) Date de dépôt: 13.10.1998
(51) Int. Cl.: F25J 3/04

(54) **Méthode de construction d'une installation cryogénique par éléments préassemblés**
Verfahren zur Installation einer kryogenischen Anlage mit vormontierten Bauteilen
Method for building a cryogenic plant with preassembled elements

(30) Priorité: 14.10.1997 FR 9712840
(43) Date de publication de la demande: 06.05.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Faure, Marcel, 77400 Lagny sur Marne (FR); Lecarpentier, Jean-Claude, 77400 Lagny sur Marne (FR)
(74) Mandataire: Le Moenner, Gabriel

(56) Documents cités:
- CH-A- 378 354
- DE-A- 2 422 450
- DE-A- 3 248 345
- DE-A- 4 320 027
- FR-A- 2 692 663
- US-A- 3 750 413
- US-A- 5 042 149
- US-A- 5 617 742
- H. TITZE: "Elemente des Apparatebaues", 1963, SPRINGER-VERLAG,

## Description

La présente invention concerne un procédé de réalisation d'un paquet par assemblage selon le préambule de la revendication 1.

L'invention s'applique en particulier à la réalisation d'un paquet d'une colonne de distillation d'air entourée de sa charpente de support et munie de ses équipements fonctionnels.

L'installation sur un site industriel d'une colonne de distillation d'air, de sa charpente de support et de ses équipements fonctionnels est une opération complexe, en particulier du fait des grandes dimensions, de la masse élevée de ces structures, qui imposent l'utilisation de moyens de levage importants, l'intervention d'équipes nombreuses, la mise en place de dispositions particulières préservant la sécurité des personnes, notamment en raison des hauteurs auxquelles elles peuvent être amenées à travailler.

Le pré-assemblage en paquet d'une colonne, de sa structure de support et de ses équipements fonctionnels permet de simplifier une telle installation. En effet, un tel paquet est généralement réalisé en atelier, puis transporté sur le site d'installation où le nombre d'opérations à effectuer est alors limité. Ce pré-assemblage est particulièrement intéressant, par exemple, lorsque le site industriel est soumis à des conditions climatiques difficiles, ou lorsqu'il est très éloigné des implantations de l'entreprise installant la colonne.

Plusieurs procédés de réalisation d'un tel paquet existent déjà.

Selon un premier procédé connu, on équipe partiellement la colonne puis on construit la charpente autour de celle-ci en effectuant progressivement les différentes liaisons nécessaires et en terminant progressivement l'équipement du paquet.

Selon un deuxième procédé, on introduit, à l'aide de moyens de levage, la colonne non équipée dans la charpente dont une des grandes faces latérales est entièrement dégagée, afin de permettre l'accès aux différents corps de métier qui viennent ensuite effectuer les liaisons nécessaires et la pose des équipements. Dans les dernières étapes de ce procédé, on construit progressivement ladite grande face latérale de la charpente et on termine d'équiper le paquet sur cette grande face latérale.

Selon un troisième procédé, tel que décrit en US A 3750413, on pré-équipe la colonne en position horizontale, on la monte en position verticale et on entoure la colonne d'une structure isolante. Ce document décrit un procédé selon le préambule de la revendication 1.

De tels procédés sont complexes, lents et coûteux, notamment en raison du peu de place offert aux différents corps de métier pour travailler. De plus, ce peu de place disponible peut également conduire d'une part à des problèmes de sécurité, plusieurs corps de métier, notamment les soudeurs, étant amenés à travailler dans un espace réduit et confiné, et d'autre part à des problèmes de délais de réalisation dus à un manque de souplesse dans les opérations d'assemblage et/ou de construction.

US-A-5 617 742 décrit une structure intérieure de colonne qui s'enfile dans une structure extérieure selon un axe longitudinal de celle-ci.

L'invention a pour but de résoudre les problèmes mentionnés précédemment en fournissant un procédé de réalisation de paquets plus simple, plus économique, plus rapide et permettant de limiter les problèmes de sécurité et les erreurs d'assemblage.

A cet effet, l'invention a pour objet un procédé selon la revendication 1.

Selon des modes particuliers de réalisation, le procédé peut présenter l'une ou plusieurs des caractéristiques suivantes :
- on pré-équipe avec au moins une partie d'au moins un équipement fonctionnel la structure extérieure avant enfilage dans cette dernière de la structure intérieure,
- la structure intérieure étant une structure de confinement d'au moins un fluide de température notablement différente de celle de la structure extérieure, on pré-équipe la structure extérieure avec au moins une partie d'au moins un équipement destinée à être sensiblement en équilibre thermique avec celle-ci,
- la structure intérieure étant une structure de confinement d'au moins un fluide de température notablement différente de celle de la structure extérieure, on pré-équipe la structure intérieure avec au moins une partie d'un équipement destinée à être sensiblement en équilibre thermique avec ledit fluide, et
- la structure extérieure est au moins un tronçon d'une charpente de support de la structure intérieure.

L'invention a enfin pour objet un procédé de construction sur site d'un assemblage comprenant une structure intérieure de confinement de fluide destinée à former au moins une partie d'une installation de fourniture de fluide, une structure extérieure entourant la structure intérieure, et des équipements fonctionnels assemblés au moins sur la structure intérieure, cet assemblage présentant un axe longitudinal, notamment sensiblement vertical, caractérisé en ce qu'on érige sur le site un paquet réalisé comme décrit ci-dessus.

L'invention sera mieux comprise à la lecture de la description qui va suivre, donnée uniquement à titre d'exemple, et faite en se référant aux dessins annexés sur lesquels :
- les figures 1 et 2 sont des vues en perspective, illustrant respectivement une colonne de distillation et sa charpente de support pré-équipées selon l'invention,
- les figures 3 et 4 sont des vues en perspective, illustrant deux phases successives de l'enfilage de la colonne de la figure 1 dans la charpente de la figure 2, et
- la figure 5 est une vue schématique en coupe transversale de la colonne et de la charpente de la figure 4, illustrant le positionnement de la colonne par rapport à la charpente.

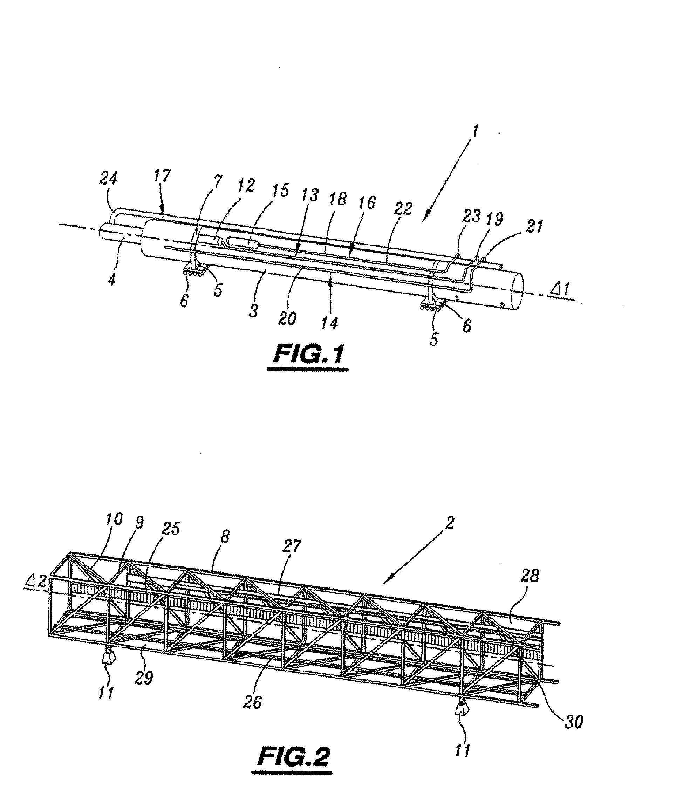

Les figures 1 et 2 représentent une colonne de distillation d'air 1 et sa charpente de support 2 avant assemblage pour réaliser un paquet.

La colonne 1, de forme générale cylindrique d'axe Δ1, comprend un tronçon principal de distillation 3 et un tronçon additionnel de distillation 4 ou « minaret » de diamètre notamment plus faible, qui prolonge le tronçon principal 3 à son extrémité supérieure (à gauche sur la figure 1). Le tronçon principal 3 comprend la partie moyenne pression, la partie basse pression et le vaporisateur-condenseur principal. La colonne 1 a, par exemple, une longueur d'environ 15 mètres.

Cette colonne 1 repose sur deux berceaux transversaux de support 5 espacés et dont les positions longitudinales sont telles que décrites plus loin.

Ces berceaux 5 sont munis de patins 6 à rouleaux d'axes transversaux à la colonne 1. Une ceinture métallique de protection 7 entoure la colonne au niveau de chaque berceau 5.

La charpente 2 est une ossature métallique de forme générale parallélépipédique comprenant quatre poteaux longitudinaux 8 reliés, sur chaque grande face latérale de la charpente 2, par des traverses 9 et des contreventements diagonaux 10. L'axe longitudinal médian de la charpente 2 est référencé Δ2 et est disposé horizontalement.

Cette charpente 2 repose sur quatre pieds 11 de hauteur réglable.

Selon l'invention, on a pré-équipé la colonne 1 et la charpente 2 en vue de la réalisation d'un paquet.

Ainsi, la colonne 1 est pré-équipée sur sa surface extérieure d'un pot séparateur de phases 12 et de sa conduite de sortie d'azote liquide 13, d'une conduite 14 de reflux de liquide, d'un échangeur de chaleur 15 et de sa conduite d'alimentation en liquide 16, et enfin d'une conduite de sortie de gaz 17.

Le pot séparateur 12 peut également être relié à une conduite de sortie d'azote gazeux (non représentée).

Ces équipements ont été assemblés sur la colonne 1 en utilisant des techniques classiques pour l'homme du métier.

Le pot séparateur 12 a une forme générale cylindrique et il est fixé à la colonne 1 avec son axe sensiblement parallèle à l'axe Δ1.

Le pot 12 est relié au niveau de sa partie inférieure (à droite sur la figure 1) à sa conduite de sortie 13, que l'on a fixée sur la colonne 1. Cette conduite 13 comprend une partie principale 18 rectiligne, d'axe disposé parallèlement à l'axe Δ1, et reliée au pot 12, et une partie en U 19 de raccordement à l'extérieur, sensiblement transversale à la colonne 1, et prolongeant la partie 18. Lorsque la colonne 1 est en fonctionnement sur site, ce pot séparateur 12 permet la production de liquide franc qui sera amené grâce à la conduite 13 vers des éléments de stockage extérieurs à la colonne.

La conduite 14 de reflux de liquide est fixée à la colonne 1 et comprend une partie principale 20 rectiligne d'axe disposé parallèlement à l'axe Δ1 et une partie en U 21 de raccordement, sensiblement transversale à la colonne 1. La partie 20 est reliée par une extrémité au tronçon 3 et par une autre extrémité à la partie 21.

L'échangeur de chaleur 15 a une forme générale cylindrique et il est fixé à la colonne 1 avec son axe sensiblement parallèle à l'axe Δ1.

L'échangeur 15 est relié au niveau de sa partie inférieure à sa conduite d'alimentation en liquide 16, que l'on a fixée sur la colonne 1. Cette conduite 16 comprend une partie principale rectiligne 22 d'axe disposé parallèlement à l'axe Δ1, et reliée à l'échangeur 15, et une partie en U 23 de raccordement, sensiblement transversale à la colonne 1 et prolongeant la partie 22.

La conduite de sortie de gaz 17 est reliée à la tête (à gauche sur la figure 1) du tronçon additionnel 4 de la colonne 1 par l'intermédiaire d'une partie en coude 24. Cette conduite 17 est fixée le long de la surface extérieure de la colonne 1 parallèlement à l'axe Δ1.

Le pot 12, les conduites 13, 14, 16 et 17, et l'échangeur 15 sont destinés à être traversés par des fluides dont les températures sont notablement inférieures à la température de la charpente 2, c'est-à-dire à la température ambiante au site sur lequel la colonne doit être installée.

La charpente 2 est pré-équipée d'une échelle intérieure 25, de rails 26 d'enfilage de la colonne 1, d'un chemin d'instrumentation 27, et d'une tôlerie de protection non représentée pour la clarté de la description.

L'échelle 25 est disposée longitudinalement à l'intérieur de la charpente 2, sur une des grandes faces latérales de la charpente 2, référencée 28. Elle est destinée à permettre l'accès dans le paquet lorsque ce dernier est érigé sur site comme décrit plus loin.

Les rails 26 sont des rails longitudinaux disposés à l'intérieur de la charpente 2 sur la face de transport 29 (en bas sur la figure 2) de la charpente 2.

Le chemin d'instrumentation 27 comprend , fixés sur une plaque longitudinale de support, des tuyauteries d'instrumentation, des câbles d'instrumentation et une conduite d'amenée de gaz, représentés schématiquement pour la clarté des figures. Le chemin d'instrumentation 27 est un équipement fonctionnel qui permet de contrôler le fonctionnement de la colonne de distillation 1 sur site. Les tuyauteries d'instrumentation comprennent des conduites de prélèvement de fluide. La conduite d'amenée de gaz permet d'amener un gaz pour maintenir hors d'humidité un isolant qui est placé entre la colonne 1 et la charpente 2 comme décrit plus loin.

Le chemin d'instrumentation 27 et notamment sa plaque de support sont destinés à se contracter notablement moins que les équipements fixés sur la colonne 1 lors du fonctionnement de cette dernière.

La charpente 2 est également recouverte au maximum de sa tôlerie de protection. En particulier, cette tôlerie est disposée à l'extérieur sur toutes les faces de la charpente, sauf sur la face 29 et sur le fond 30 de la charpente (à droite sur la figure 2). Cette tôlerie est destinée à former une enveloppe de protection et d'isolation thermique de la colonne.

Après avoir pré-équipé la colonne 1 et la charpente 2 comme décrit en regard des figures 1 et 2, on assure l'horizontalité de l'axe Δ2 en jouant sur les réglages des pieds 11. Ce positionnement peut être assuré en utilisant des niveaux ou une autre technique classique pour l'homme du métier.

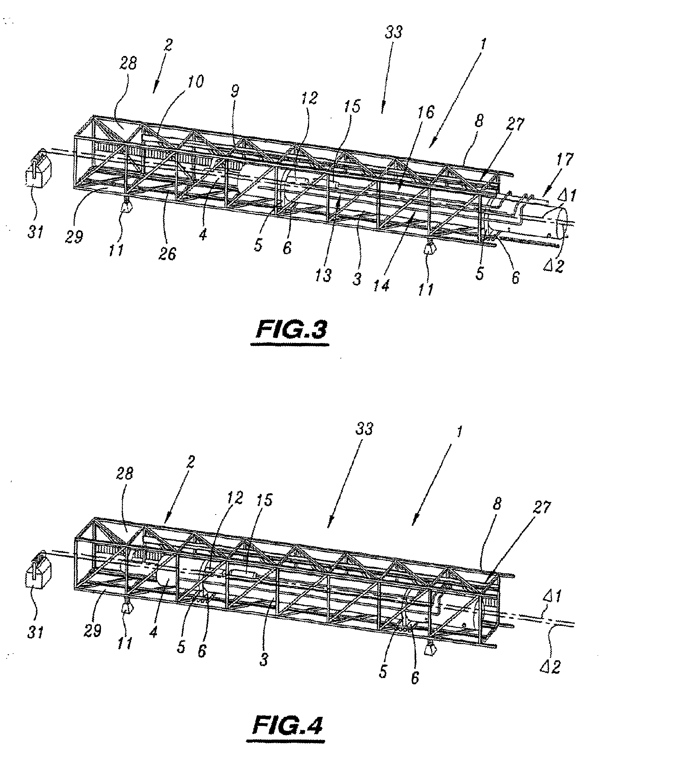

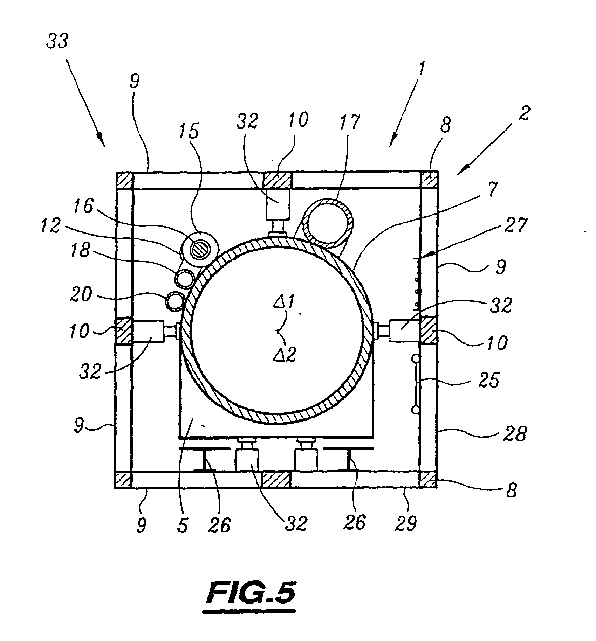

Comme illustré sur les figures 3 et 4, on introduit ensuite la colonne 1 dans la charpente 2 par enfilage, en faisant rouler les patins 6 sur les rails 26, grâce à un treuil 31 relié par un câble à l'extrémité supérieure (à gauche sur la figure 3) de la colonne 1.

On place longitudinalement la colonne 1 dans la charpente 2 de telle manière que les deux berceaux 5 soient chacun en regard de traverses 9 de chacune des grandes faces latérales de la charpente 2. Les positions longitudinales des berceaux 5 par rapport à la colonne 1 ont donc été choisies, en effectuant des mesures adéquates, pour obtenir ce résultat.

On place alors cinq vérins à vis 32 (figure 5) au niveau de chaque berceau 5, soit dix vérins au total pour le paquet 33 en cours de réalisation, entre la colonne 1 et la charpente 2.

Comme illustré par la figure 5 pour chaque berceau 5, un vérin 32 vertical est disposé entre la colonne 1 et une traverse 9 de la grande face latérale supérieure (sur la figure 5) de la charpente 2, et deux vérins 32 horizontaux sont disposés chacun entre la colonne 1 et une traverse 9 d'une grande face latérale verticale (sur la figure 5) de la charpente 2. Les extrémités intérieures de ces trois vérins 32 prennent appui et sont soudés sur la ceinture 7 entourant la colonne 1 et leurs extrémités extérieures sont fixées sur les traverses 9 associées de la charpente 2.

Deux vérins 32 verticaux sont de plus disposés entre la face inférieure du berceau 5 et une traverse 9 de la face 29 de la charpente 2. Leurs extrémités supérieures sont fixées au berceau 5 et leurs extrémités inférieures sur la charpente 2. On enlève ensuite les patins 6 sous les deux berceaux 5, comme représenté sur la figure 5. On positionne ensuite la colonne 1 par rapport à la charpente 2 de manière que leurs axes Δ1 et Δ2 soient parallèles et présentent une position relative souhaitée. La position relative de ces deux axes peut être déterminée grâce à un dispositif de visée ou en utilisant une autre technique classique pour l'homme du métier.

Cette position relative peut être modifiée en jouant sur le réglage des vérins 32. De préférence, elle est choisie telle que la colonne 1 soit disposée sensiblement dans une position centrale de la charpente 2, c'est-à-dire telle que Δ1 et Δ2 soient sensiblement confondus et définissent l'axe longitudinal du paquet 33.

Une fois le positionnement relatif de la colonne 1 et de la charpente 2 terminé, on les solidarise, par exemple, par pointage des écrous des vérins 32.

On termine ensuite d'équiper le paquet 33, notamment en faisant passer l'extrémité de raccordement de la conduite 13 au travers de la tôlerie de protection de la charpente 2 et en reliant les tuyauteries et les câbles du chemin d'instrumentation 27 aux parties correspondantes de la colonne 1.

Un isolant classique est ensuite placé entre la colonne 1 et la charpente 2.

On dispose en dernier lieu des moyens de protection des zones ouvertes du paquet 33, constitués, par exemple, de capotes étanches à l'eau.

Le paquet 33 est alors prêt à être transporté sur un site industriel. Une fois sur site, on érige le paquet 33 selon son axe longitudinal à l'aide de moyens de levage.

Les extrémités inférieures (à droite sur la figure 4) des poteaux longitudinaux 8 sont disposés sur des pieds de hauteur réglable. Grâce, par exemple, à un dispositif de visée ou une autre technique classique de l'homme du métier, on assure la verticalité de l'axe Δ2.

L'axe Δ1 de la colonne 1 étant parallèle à l'axe Δ2 de la charpente 2, en modifiant la hauteur respective des pieds sur lesquels repose la charpente 2, on assure aisément la verticalité de la colonne 1 nécessaire à son bon fonctionnement.

On fige alors le réglage du paquet 33 par rapport au sol du site industriel.

Enfin, on termine de poser la tôlerie de protection sur la face de transport 29 du paquet 33 et on raccorde les équipements du paquet 33 à l'environnement extérieur à ce dernier.

Le pré-équipement de la colonne et de la charpente selon l'invention permet à différents corps de métier de travailler en parallèle sur ces deux structures sans se gêner, l'ordre de pose des équipements sur la charpente et sur la colonne étant libre contrairement au cas des procédés classiques de réalisation de paquets.

La sécurité est donc améliorée et on peut travailler sur pratiquement toutes les faces de chaque structure. Les risques de concentration de gaz nocifs dans des zones confinées sont également réduits. Enfin, on peut construire la charpente et équiper cette dernière à l'extérieur en étant protégé des intempéries par la tôlerie de protection.

Le nombre d'ouvertures d'accès ménagées dans la charpente est limité par rapport aux paquets classiques, ce qui limite les opérations de démontage/réassemblage de la charpente et permet de poser à l'avance la tôlerie de protection sur trois grandes faces latérales de la charpente au lieu de deux en général selon les procédés classiques.

Les charpentes utilisées pour la mise en oeuvre du procédé selon l'invention sont, pour cette raison, plus rigides et donc plus facilement transportables que dans les procédés traditionnels de réalisation de paquets.

Enfin, il suffit d'un treuil pour procéder à l'enfilage, et le procédé ne nécessite donc pas l'utilisation de moyens de levage importants dans l'atelier comme dans les procédés antérieurs de réalisation de paquet.

On a constaté un gain de temps de fabrication de 25 à 30 % par rapport aux procédés de fabrication classiques. D'une manière plus générale, la structure extérieure peut être une structure d'isolation thermique et la structure intérieure peut être par exemple un réservoir cryogénique, c'est-à-dire contenant un fluide à une température inférieure d'au moins 100°C environ à la température ambiante.

On peut également mettre en oeuvre le procédé selon l'invention pour réaliser des paquets de tronçon de structures intérieure et extérieure, la structure intérieure étant alors, par exemple, un tronçon d'une colonne et la structure extérieure étant alors un tronçon de charpente correspondant.

## Revendications

1. Procédé de réalisation d'un paquet (33) par assemblage d'une structure intérieure (1) qui est au moins un tronçon d'une colonne de distillation cryogénique, d'une structure extérieure (2), qui est au moins un tronçon d'une enveloppe d'isolation thermique, entourant la structure intérieure, et des équipements fonctionnels (12, 13, 14, 15, 16, 17, 27) au moins sur la structure intérieure (1), la structure intérieure (1) étant destinée à former au moins une partie d'une installation de fourniture de fluide, dans lequel on pré-équipe au moins la structure intérieure (1) avec au moins une partie d'au moins un équipement fonctionnel avant l'assemblage du paquet et l'on introduit la structure intérieure pré-équippée dans la structure extérieure (2) par enfilage selon un axe longitudinal du paquet (33) **caractérisé en ce qu'**on enfile la structure intérieure (1) dans la structure extérieure (2) en la déplaçant sur des rails (26) prévus dans la structure extérieure (2) disposée sensiblement horizontalement.

2. Procédé selon la revendication 1, **caractérisé en ce qu'**on pré-équipe avec au moins une partie d'au moins un équipement fonctionnel la structure extérieure (2) avant enfilage dans cette dernière de la structure intérieure (1).

3. Procédé selon la revendication 2, **caractérisé en ce que** la structure intérieure (1) étant une structure de confinement d'au moins un fluide de température notablement différente de celle de la structure extérieure, on pré-équipe la structure extérieure avec au moins une partie d'au moins un équipement (27) destinée à être sensiblement en équilibre thermique avec celle-ci.

4. Procédé selon l'une quelconque des revendications 1 à 3, **caractérisé en ce que** la structure intérieure (1) étant une structure de confinement d'au moins un fluide de température notablement différente de celle de la structure extérieure, on pré-équipe la structure intérieure avec au moins une partie d'un équipement destinée (12, 13, 14, 15, 16, 17) à être sensiblement en équilibre thermique avec ledit fluide.

5. Procédé selon l'une quelconque des revendications 1 à 4, **caractérisé en ce que** la structure extérieure est au moins un tronçon d'une charpente de support de la structure intérieure.

6. Procédé de construction sur site d'un assemblage comprenant une structure intérieure de confinement de fluide (1) destinée à former au moins une partie d'une installation de fourniture de fluide, une structure extérieure (2) entourant la structure intérieure, et des équipements fonctionnels (12, 13, 14, 15, 16, 17, 27) assemblés au moins sur la structure intérieure (1), cet assemblage présentant un axe longitudinal, notamment sensiblement vertical, **caractérisé en ce qu'**on érige sur le site un paquet (33) réalisé selon l'une quelconque des revendications 1 à 5.

## Claims

1. Method of producing a package (33) by assembling an internal structure (1) which is at least one section of a cryogenic distillation column, an external structure (2), which is at least one section of a thermal insulation jacket, surrounding the internal structure, and functional items of equipment (12, 13, 14, 15, 16, 17, 27) on at least the internal structure (1), the internal structure (1) being intended to form at least part of a fluid supply plant, in which at least the internal structure (1) is pre-equipped with at least part of at least one functional item of equipment before assembling the package and the pre-equipped internal structure is introduced into the external structure (2) by being pulled in along a longitudinal axis of the package (33), **characterized in that** the internal structure (1) is pulled into the external structure (2) by moving it along rails (26) provided in the external structure (2) when the latter is placed more or less horizontally.

2. Method according to Claim 1, **characterized in that** the external structure (2) is pre-equipped with at least part of at least one functional item of equipment before the internal structure (1) is pulled into the external structure (2).

3. Method according to Claim 2, **characterized in that**, since the internal structure (1) is a structure for confining at least one fluid at a temperature significantly different from that of the external structure, the external structure is pre-equipped with at least part of at least one item of equipment (27) intended to be more or less in thermal equilibrium with this external structure.

4. Method according to any one of Claims 1 to 3, **characterized in that**, since the internal structure (1) is a structure for confining at least one fluid having a temperature significantly different from that of the external structure, the internal structure is pre-equipped with at least part of an item of equipment (12, 13, 14, 15, 16, 17) intended to be more or less in thermal equilibrium with the said fluid.

5. Method according to any one of Claims 1 to 4, **characterized in that** the external structure is at least one section of a framework for supporting the internal structure.

6. Method for the on-site construction of an assembly comprising a fluid-confining internal structure (1) intended to form at least part of a fluid supply plant, an external structure (2) surrounding the internal structure, and functional items of equipment (12, 13, 14, 15, 16, 17, 27) joined to at least the internal structure (1), this assembly having an especially more or less vertical longitudinal axis, **characterized in that** a package (33) produced according to any one of Claims 1 to 5 is erected on site.

## Patentansprüche

1. Verfahren zur Montage einer Baugruppe (33) durch Zusammenbau einer inneren Struktur (1), die zumindest ein Teilstück einer Tiefsttemperatur-Destillationskolonne ist, einer äußeren Struktur (2), die zumindest ein Teilstück einer Wärmeisolationshülle ist, die die innere Struktur umgibt, und funktionaler Einrichtungen (12, 13, 14, 15, 16, 17, 27) an zumindest der inneren Struktur (1), wobei die innere Struktur (1) dazu bestimmt ist, zumindest einen Teil einer Fluidlieferungsanlage zu bilden, wobei zumindest die innere Struktur (1) vor dem Zusammenbau der Baugruppe vorab mit zumindest einem Teil zumindest einer funktionalen Einrichtung ausgestattet wird und die vorab ausgestattete innere Struktur in die äußere Struktur (2) durch Einschiebung entlang einer Längsachse der Baugruppe (33) eingeführt wird, **dadurch gekennzeichnet, dass** die innere Struktur (1) in die äußere Struktur (2) eingeschoben wird, indem sie auf Schienen (26) verschoben wird, die in der äußeren Struktur (2) vorgesehen ist, die im Wesentlichen horizontal angeordnet ist.

2. Verfahren nach Anspruch 1, **dadurch gekennzeichnet, dass** die äußere Struktur (2) vor dem Einschieben der inneren Struktur (1) in diese vorab mit zumindest einem Teil zumindest einer funktionalen Einrichtung ausgestattet wird.

3. Verfahren nach Anspruch 2, **dadurch gekennzeichnet, dass**, während die innere Struktur (1) eine Struktur zur Einschließung zumindest eines Fluids mit einer Temperatur ist, die von derjenigen der äußeren Struktur erheblich verschieden ist, die äußere Struktur vorab mit zumindest einem Teil zumindest einer Einrichtung (27) ausgestattet wird, der dazu bestimmt ist, im Wesentlichen im thermischen Gleichgewicht mit dieser zu sein.

4. Verfahren nach einem der Ansprüche 1 bis 3, **dadurch gekennzeichnet, dass**, während die innere Struktur (1) eine Struktur zur Einschließung zumindest eines Fluids mit einer Temperatur ist, die von derjenigen der äußeren Struktur erheblich verschieden ist, die innere Struktur vorab mit zumindest einem Teil einer Einrichtung (12, 13, 14, 15, 16, 17) ausgestattet wird, der dazu bestimmt ist, im Wesentlichen im thermischen Gleichgewicht mit dem Fluid zu sein.

5. Verfahren nach einem der Ansprüche 1 bis 4, **dadurch gekennzeichnet, dass** die äußere Struktur zumindest ein Teilstück eines Traggerüsts der inneren Struktur ist.

6. Verfahren zur Installation eines Aufbaus vor Ort mit einer inneren Struktur zur Einschließung von Fluid (1), die dazu bestimmt ist, zumindest einen Teil einer Fluidlieferungsanlage zu bilden, einer äußeren Struktur (2), die die innere Struktur umgibt, und funktionalen Einrichtungen (12, 13, 14, 15, 16, 17, 27), die zumindest an der inneren Struktur (1) angebaut sind, wobei dieser Aufbau eine insbesondere im Wesentlichen vertikale Längsachse aufweist, **dadurch gekennzeichnet, dass** vor Ort eine Baugruppe (33) errichtet wird, dass nach einem der Ansprüche 1 bis 5 montiert ist.
